# EUROPEAN PATENT SPECIFICATION

(11) **EP 3 230 557 B1**
(45) Date of publication and mention of the grant of the patent: **24.03.2021**
(21) Application number: 15823046.6
(22) Date of filing: 07.12.2015
(51) Int. Cl.: E21B 43/28, E21C 41/16, B65G 5/00

(54) **SOLUTION MINING A STABLE ROOF UNDER AN INERT GAS**
UNTERTAGELAUGUNG EINES STABILEN DACHES UNTER EINEM INERTGAS
EXTRACTION PAR DISSOLUTION D'UN TOIT STABLE SOUS UN GAZ INERTE

(30) Priority: 09.12.2014 US 201462089564 P; 13.05.2015 US 201514711182
(43) Date of publication of application: 18.10.2017
(73) Proprietor: L'Air Liquide Société Anonyme pour l'Etude et l'Exploitation des Procédés Georges Claude, 75007 Paris (FR)
(72) Inventor: STRYBOS, Ronald, Kountze, Texas 77625 (US)
(74) Representative: Air Liquide
(86) International application number: PCT/US2015/064184
(87) International publication number: WO 2016/094267

(56) References cited:
- WO-A1-2011/119197
- GB-A- 975 014
- US-A- 4 161 715
- US-A- 4 300 801

## Description

### Cross Reference to Related Applications

This application claims the benefit of priority under 35 U.S.C. § 119 (a) and (b) to US Provisional Patent Application No. 62/089,564 filed December 9, 2014 and US Non-provisional Patent Application No. 14/711,182 filed May 13, 2015.

### Background

Leached storage caverns in salt formations typically have a relatively flat roof. Large diameter flat roofs in a salt cavern can be unstable due to the low tensile strength of the salt, salt movement, fractured salt or low pressure in the cavern. The stability of the roof may be increased by leaching a modified dome shape in the roof.

The leaching of storage caverns in salt formations is typically performed under a blanket of liquid hydrocarbons. Some storage applications may require very clean or ultra pure caverns, where residual hydrocarbons could contaminate the stored product. To prevent these contamination issues, ultra pure salt caverns can be leached under an inert gas blanket.

WO2011119197 A1 discloses a method having the features of the preamble of claim 1.

This invention claims that to increase the overall stability of the roof of a leached salt cavern, a domed roof is leached using in an inert gas blanket

### Summary

Claim 1 defines a method of solution mining a stable roof under an inert gas blanket or inert gas pad according to the invention. This method includes a solution mined underground salt cavern, wherein the salt cavern has a main body with a mean diameter of D_{N}, and an upper portion comprising an inert gas pad, a stream of leaching water which is injected below the inert gas pad with a velocity V, thereby leaching an Nth tier adjacent to the upper portion having a height H1 and a mean diameter D_{N+1} that is smaller than D_{N} by a ratio R raising the inert gas pad by an amount A1, providing a stream of leaching water which is injected below the inert gas pad with a velocity V, thereby leaching a N+1th tier adjacent to the Nth tier having a height H2 and a to a mean diameter D_{N+2} that is smaller than D_{N+1} by a ratio R, and repeating steps c and d a number of times T, thereby forming a stable roof. Preferred embodiments are defined in the dependent claims.

### Brief Description of the Drawings

For a further understanding of the nature and objects for the present invention, reference should be made to the following detailed description, taken in conjunction with the accompanying drawings, in which like elements are given the same or analogous reference numbers and wherein:
- Figure 1 illustrates an embodiment of the invention;
- Figure 2 illustrates an embodiment of the invention;
- Figure 3 illustrates an embodiment of the invention;
- Figure 4 illustrates an embodiment of the invention;
- Figure 5 illustrates an embodiment of the invention; and
- Figure 6 illustrates an embodiment of the invention.

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

This invention claims that to increase the overall stability of the roof of a leached salt cavern, a domed roof 204 is leached using in an inert gas blanket **102,** which could be nitrogen, helium, argon or methane. The inert gas blanket is injected into the outer annulus string **106** of a salt cavern **101.** The blanket pressure is maintained at a pressure above the water injection pressure but less than the maximum pressure for the cavern as defined by the depth of the final cemented casing shoe and the maximum pressure gradient for the cavern.

The blanket depth may be controlled by monitoring the blanket gas pressure and by verification of the blanket depth may be by wire line density measurement for the gas-brine interface. Inert gas depth may be raised in increments of between 6, 046 to 12,192 meters (20 to 40 ft) at a time. The cavern roof may be leached to a diameter 20 to 30 percent less than the old essentially flat roof. Once the new roof is leached to the smaller diameter, the inert gas blanket is raised another 6, 046 to 12,192 meters (20 to 40 ft) and the cavern roof is leached to a diameter 20 to 30 percent less than the old roof. This process continues until the final geometry of the cavern approximates a dome. Geometry of the roof is verified by through pipe sonar.

It is further claimed that the geometry of the storage cavern roof is controlled by the flow of water **103** into the cavern. The water injection flow into the cavern may be maintained between the minimum flow rate of 1,524 meter per second (5 ft/sec) velocity and the maximum flow rate of 2,438 meters per second (8 ft/sec). Ideal cavern roof geometry is achieved by flowing at a constant flow rate of approximately between 1,829 and 2,134 meters per second (between 6 and 7 ft/sec).

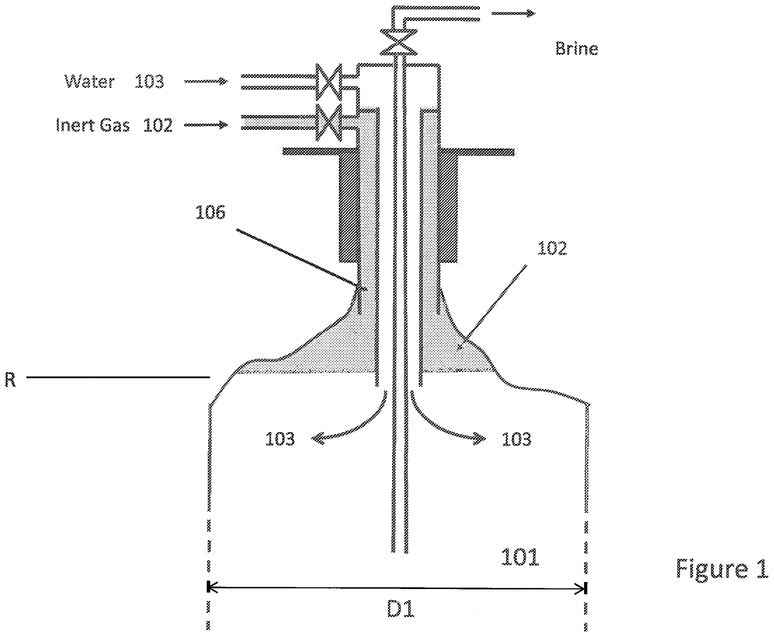

Turning to Figure 1, a solution mined underground salt cavern **101** has a main body with a mean diameter of D₁, and an upper portion comprising an inert gas pad **102.** The inert gas is selected from the group consisting of nitrogen, helium, argon, or methane. A stream of leaching water **103** is injected below inert gas pad **102** with a velocity V. Velocity is between 1,524 meter per second and 2,743 meters per second (between 5 feet / second and 9 feet per second), preferably V may be between 1,829 meter per second and 2,134 meters per second (between 6 feet / second and 7 feet / second).

The inert gas pad has a pressure, and a depth defined by the interface between the inert gas and a brine / water mixture produced by the solution mining, and the inert gas pad depth may be determined by monitoring the gas pad pressure. The inert gas pad depth may be verified by wire line density measurement at the interface.

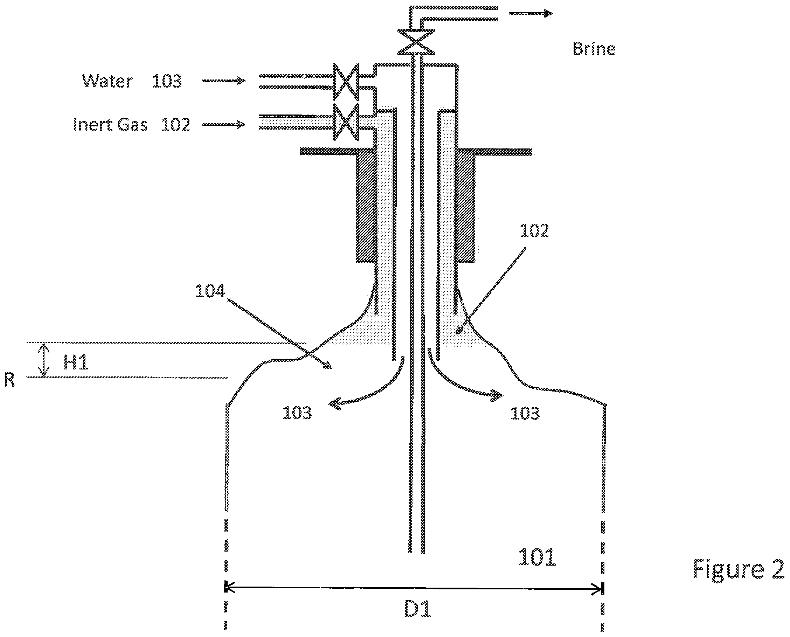

Now turning to Figure 2, inert gas pad height is raised H1 feet. H1 may be between 6, 046 and 12,192 meters (between 20 feet and 40 feet), preferably between 7,620 and 10,668 meters (between 25 feet and 35 feet), more preferably 9,144 meters (30 feet). As leaching water **103** is injected, it now reaches region **104,** which had previously been protected from leaching by inert gas pad **102,** thereby solution mining this portion of the roof of cavern **101.**

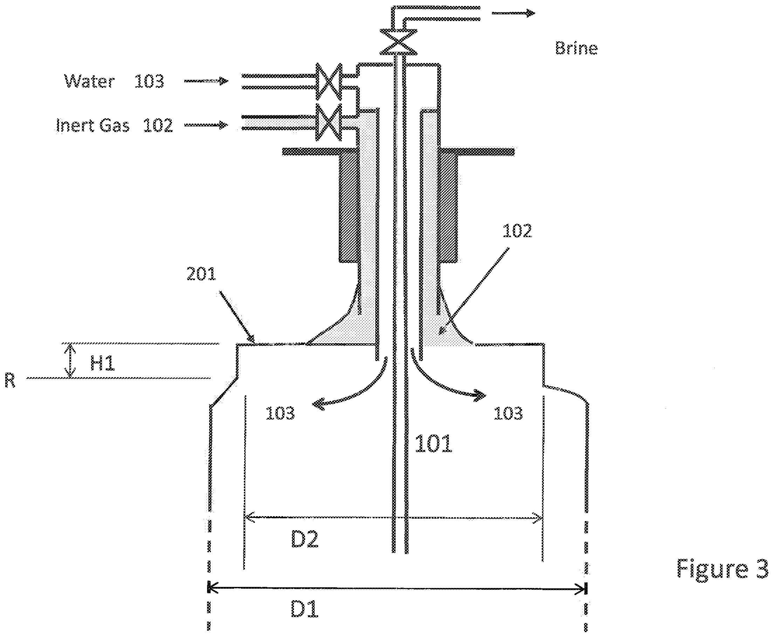

Turning to Figure 3, leaching water **103** produces a first tier **201** in the top of cavern **101.** First tier **201** has a height H1 above the nominal roof of the cavern R, and a mean diameter D₂ that is smaller than D₁ by a predetermined ratio R. The ratio R is between 15% and 35%, preferably it may be between 20% and 30%, even more preferably it may be 25%.

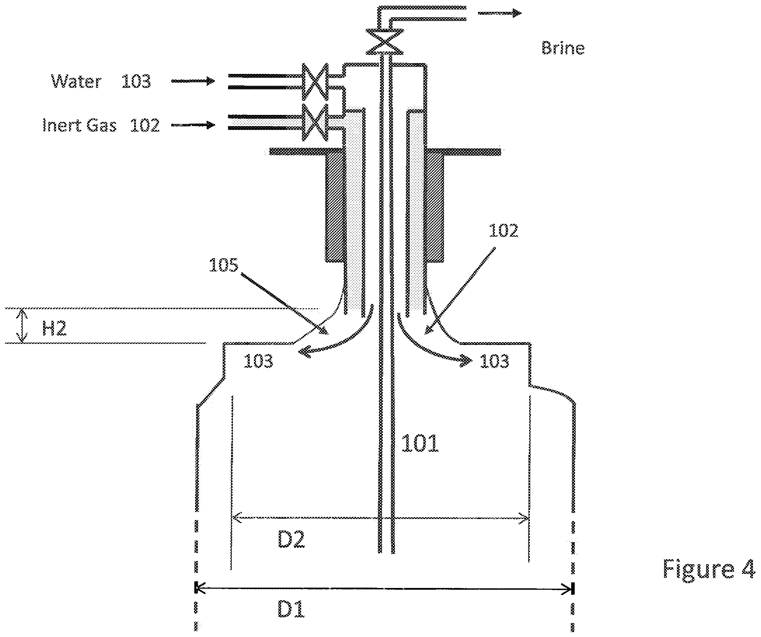

Now turning to Figure 4, inert gas pad height is raised H2 feet. H2 is between 3,048 and 15,240 meters (between 10 feet and 50 feet), preferably between 6, 046 and 12,192 meters (between 20 feet and 40 feet), preferably between 7,620 and 10,668 meters (between 25 feet and 35 feet), more preferably 9,144 meters (30 feet). As leaching water **103** is injected, it now reaches region **105,** which had previously been protected from leaching by inert gas pad **102,** thereby solution mining this portion of the roof of cavern **101.**

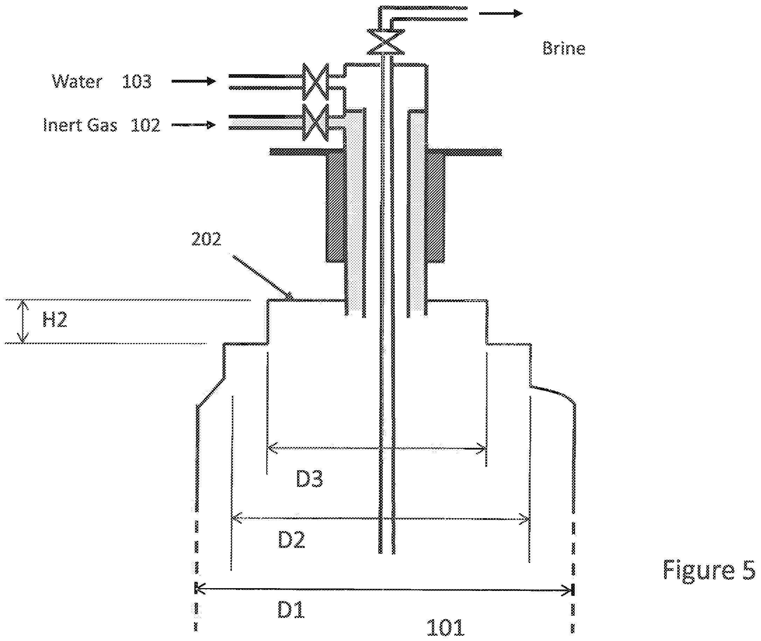

Turning to Figure 5, leaching water **103** produces a second tier **202** in the top of cavern **101.** Second tier **202** has a height H2 above first tier **201,** and a mean diameter D₃ that is smaller than D₂ by a predetermined ratio R. The ratio R is between 15% and 35%, preferably it may be between 20% and 30%, even more preferably it may be 25%.

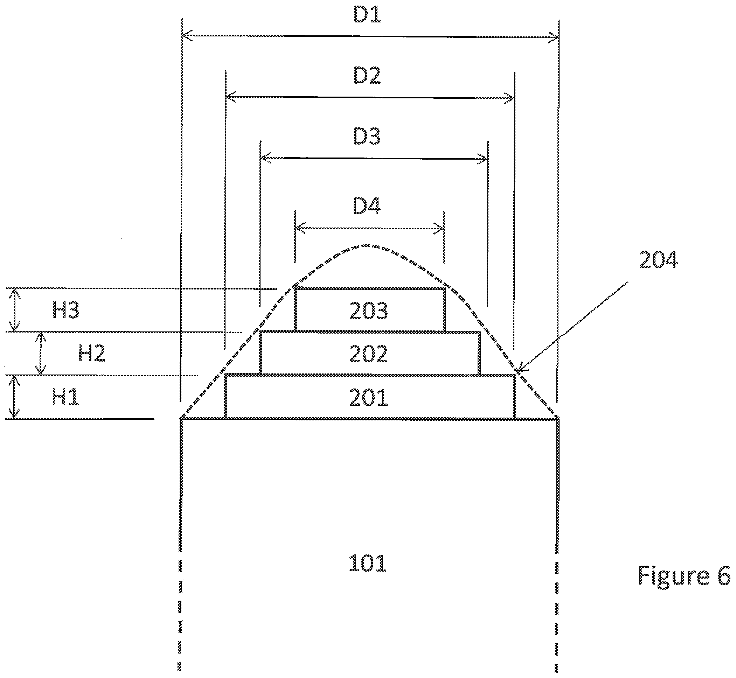

As indicated in Figure 6, a stream of leaching water which is injected below the inert gas pad with a velocity V leaches a N+1th tier adjacent to the Nth tier having a height H2 and a to a mean diameter D_{N+2} that is smaller than D_{N+1} by a predetermined ratio R. These steps are repeated a predetermined number of times T, thereby forming a stable, dome shaped roof.

## Claims

1. A method of solution mining a stable roof (204) under an inert gas blanket (102) or inert gas pad (102), comprising:
a) providing a solution mined underground salt cavern (101) wherein said salt cavern (101) has a main body with a mean diameter of D_{N}, and an upper portion comprising an inert gas pad (102)
b) providing a stream of leaching water (103) which is injected below the inert gas pad (102), thereby leaching an Nth tier adjacent to the upper portion having a height H1 and a mean diameter D_{N+1} that is smaller than D_{N} by a predetermined ratio R,
c) raising the inert gas pad height by a predetermined amount,
d) providing a stream of leaching water which is injected below the inert gas pad (102), thereby leaching a N+1th tier adjacent to the Nth tier having a height H2 and a mean diameter D_{N+2} that is smaller than D_{N+1} by said predetermined ratio,
e) repeating steps c and d a predetermined number of times T, thereby forming a stable roof (204) **characterized in that** the stream of leaching water is injected with a velocity V of between 1,524 and 2,743 meters per second (between 5 and 9 feet per second), the predetermined amount is between 3,048 and 15,240 meters (between 10 and 50 feet) and the predetermined ratio is between 15 and 35%.

2. The method of solution mining a stable roof under an inert gas blanket or inert gas pad (102) of claim 1, wherein the inert gas is selected from the group consisting of nitrogen, helium, argon, or methane.

3. The method of solution mining a stable roof under an inert gas blanket or inert gas pad (102) of claim 1, wherein the inert gas is nitrogen.

4. The method of solution mining a stable roof under an inert gas blanket or inert gas pad (102) of claim 1, wherein H2 is between 3,048 and 15,240 meters (between 10 and 50 feet).

5. The method of solution mining a stable roof under an inert gas blanket or inert gas pad (102) of claim 1, wherein H2 is between 6, 046 and 12,192 meters (between 20 and 40 feet.

6. The method of solution mining a stable roof under an inert gas blanket or inert gas pad (102) of claim 1, wherein H2 is 9,144 meters (30 feet).

7. The method of solution mining a stable roof under an inert gas blanket or inert gas pad (102) of claim 1, wherein the inert gas pad has a pressure, and a depth defined by the interface between the inert gas and a brine / water mixture produced by the solution mining, and wherein the inert gas pad depth is determined by monitoring the gas pad pressure.

8. The method of solution mining a stable roof under an inert gas blanket or inert gas pad (102) of claim 1, wherein the inert gas pad has a depth defined by the interface between the inert gas and a brine / water mixture produced by the solution mining, and wherein the inert gas pad depth is verified by wire line density measurement at the interface.

## Patentansprüche

1. Verfahren zur Untertagelaugung eines stabilen Daches (204) unter einer Inertgasdecke (102) oder einem Inertgaspolster (102), umfassend:
a) Bereitstellen einer unter Tage gelaugten Untergrundsalzkaverne (101), wobei die Salzkaverne (101) einen Hauptkörper mit einem mittleren Durchmesser D_{N} und einen oberen Abschnitt aufweist, der ein Inertgaspolster (102) umfasst,
b) Bereitstellen eines Stroms von Auslaugungswasser (103), das unter das Inertgaspolster (102) injiziert wird, wodurch eine N-te Schicht, die an den oberen Abschnitt angrenzt, mit einer Höhe H1 und einem mittleren Durchmesser D_{N+1}, der um ein vorbestimmtes Verhältnis R kleiner als D_{N} ist, ausgelaugt wird,
c) Erhöhen der Inertgaspolsterhöhe um einen vorbestimmten Betrag,
d) Bereitstellen eines Stroms von Auslaugungswasser, das unter das Inertgaspolster (102) injiziert wird, wodurch eine N+1-te Schicht, die an die N-te Schicht angrenzt, mit einer Höhe H2 und einem mittleren Durchmesser D_{N+2}, der um ein vorbestimmtes Verhältnis kleiner als D_{N+1} ist, ausgelaugt wird,
e) Wiederholen der Schritte c und d eine vorbestimmte Anzahl von Malen T, wodurch ein stabiles Dach gebildet wird (204),
**dadurch gekennzeichnet, dass** der Strom des Auslaugungswassers mit einer Geschwindigkeit V zwischen 1.524 und 2.743 Metern pro Sekunde (zwischen 5 und 9 Fuß pro Sekunde) injiziert wird, die vorbestimmte Menge zwischen 3.048 und 15.240 Metern (zwischen 10 und 50 Fuß) beträgt und das vorbestimmte Verhältnis zwischen 15 und 35% beträgt.

2. Verfahren zur Untertagelaugung eines stabilen Daches unter einer Inertgasdecke oder einem Inertgaspolster (102) nach Anspruch 1, wobei das Inertgas aus der Gruppe bestehend aus Stickstoff, Helium, Argon oder Methan ausgewählt wird.

3. Verfahren zur Untertagelaugung eines stabilen Daches unter einer Inertgasdecke oder einem Inertgaspolster (102) nach Anspruch 1, wobei das Inertgas Stickstoff ist.

4. Verfahren zur Untertagelaugung eines stabilen Daches unter einer Inertgasdecke oder einem Inertgaspolster (102) nach Anspruch 1, wobei H2 zwischen 3.048 und 15.240 Metern (zwischen 10 und 50 Fuß) beträgt.

5. Verfahren zur Untertagelaugung eines stabilen Daches unter einer Inertgasdecke oder einem Inertgaspolster (102) nach Anspruch 1, wobei H2 zwischen 6.046 und 12.192 Metern (zwischen 20 und 40 Fuß) beträgt.

6. Verfahren zur Untertagelaugung eines stabilen Daches unter einer Inertgasdecke oder einem Inertgaspolster (102) nach Anspruch 1, wobei H2 9.144 Meter (30 Fuß) beträgt.

7. Verfahren zur Untertagelaugung eines stabilen Daches unter einer Inertgasdecke oder einem Inertgaspolster (102) nach Anspruch 1, wobei das Inertgaspolster einen Druck und eine Tiefe aufweist, die durch die Grenzfläche zwischen dem Inertgas und einem Sole/Wasser-Gemisch, das durch die Untertagelaugung erzeugt wird, definiert ist, und wobei die Tiefe des Inertgaspolsters durch Überwachen des Gaspolsterdrucks bestimmt wird.

8. Verfahren zur Untertagelaugung eines stabilen Daches unter einer Inertgasdecke oder einem Inertgaspolster (102) nach Anspruch 1, wobei das Inertgaspolster eine Tiefe aufweist, die durch die Grenzfläche zwischen dem Inertgas und einem Sole/WasserGemisch, das durch die Untertagelaugung erzeugt wird, definiert ist, und wobei die Tiefe des Inertgaspolsters durch eine Drahtleitungsdichtemessung an der Grenzfläche überprüft wird.

## Revendications

1. Procédé d'extraction par dissolution d'un toit stable (204) sous un manteau de gaz inerte (102) ou un tampon de gaz inerte (102), comprenant :
a) la fourniture d'une caverne de sel souterraine extraite par dissolution (101) dans lequel ladite caverne (101) présente un corps principal avec un diamètre moyen D_{N}, et une partie supérieure comprenant un tampon de gaz inerte (102),
b) la fourniture d'un flux d'eau de lixiviation (103) qui est injecté au-dessous du tampon de gaz inerte (102), lixiviant ainsi un Nième étage adjacent à la partie supérieure présentant une hauteur H1 et un diamètre moyen D_{N+1} qui est inférieur à D_{N} selon un rapport prédéterminé R,
c) l'augmentation de la hauteur du tampon de gaz inerte d'une quantité prédéterminée,
d) la fourniture d'un flux d'eau de lixiviation qui est injecté au-dessous du tampon de gaz inerte (102), lixiviant ainsi un N+1ième étage adjacent au Nième étage présentant une hauteur H2 et un diamètre moyen D_{N+2} qui est inférieur à D_{N+1} selon ledit rapport prédéterminé,
e) la répétition des étapes c et d un nombre de fois T prédéterminé, formant ainsi un toit stable (204),
**caractérisé en ce que** le flux d'eau de lixiviation est injecté à une vitesse V entre 1,524 et 2,743 mètres par seconde (entre 5 et 9 pieds par seconde), la quantité prédéterminée est entre 3,048 et 15,240 mètres (entre 10 et 50 pieds) et le rapport prédéterminé est entre 15 et 35 %.

2. Procédé d'extraction par dissolution d'un toit stable sous un manteau de gaz inerte ou un tampon de gaz inerte (102) selon la revendication 1, dans lequel le gaz inerte est sélectionné dans le groupe consistant en l'azote, l'hélium, l'argon ou le méthane.

3. Procédé d'extraction par dissolution d'un toit stable sous un manteau de gaz inerte ou un tampon de gaz inerte (102) selon la revendication 1, dans lequel le gaz inerte est de l'azote.

4. Procédé d'extraction par dissolution d'un toit stable sous un manteau de gaz inerte ou un tampon de gaz inerte (102) selon la revendication 1, dans lequel H2 fait entre 3,048 et 15,240 mètres (entre 10 et 50 pieds).

5. Procédé d'extraction par dissolution d'un toit stable sous un manteau de gaz inerte ou un tampon de gaz inerte (102) selon la revendication 1, dans lequel H2 fait entre 6,046 et 12,192 mètres (entre 20 et 40 pieds).

6. Procédé d'extraction par dissolution d'un toit stable sous un manteau de gaz inerte ou un tampon de gaz inerte (102) selon la revendication 1, dans lequel H2 fait 9,144 mètres (30 pieds).

7. Procédé d'extraction par dissolution d'un toit stable sous un manteau de gaz inerte ou un tampon de gaz inerte (102) selon la revendication 1, dans lequel le tampon de gaz inerte présente une pression, et une profondeur définie par l'interface entre le gaz inerte et un mélange saumure/eau produit par l'extraction par dissolution, et dans lequel la profondeur du tampon de gaz inerte est déterminée en surveillant la pression du tampon de gaz.

8. Procédé d'extraction par dissolution d'un toit stable sous un manteau de gaz inerte ou un tampon de gaz inerte (102) selon la revendication 1, dans lequel le tampon de gaz inerte présente une profondeur définie par l'interface entre le gaz inerte et un mélange saumure/eau produit par l'extraction par dissolution, et dans lequel la profondeur du tampon de gaz inerte est vérifiée par une mesure de densité de câble au niveau de l'interface.
